# EUROPEAN PATENT SPECIFICATION

(11) **EP 3 905 482 B1**
(45) Date of publication and mention of the grant of the patent: **02.04.2025**
(21) Application number: 21171567.7
(22) Date of filing: 30.04.2021
(51) Int. Cl.: H02J 13/00

(54) **BIDIRECTIONAL WIRELESS DEVICE**
BIDIREKTIONALES DRAHTLOSES GERÄT
DISPOSITIF SANS FIL BIDIRECTIONNEL

(30) Priority: 30.04.2020 IT 202000009544
(43) Date of publication of application: 03.11.2021
(73) Proprietor: Widesign S.r.l., 20131 Milano (MI) (IT)
(72) Inventor: BASEGGIO, Giorgio, 20131 Milano (IT)
(74) Representative: Premru, Rok

(56) References cited:
- US-A1- 2008 005 558
- US-A1- 2015 108 901
- US-B2- 8 018 097

## Description

A two-way wireless device is described according to claim 1.

The two-way wireless device described hereinafter comprises at least one sensor and at least one actuator for regulating an electric load.

The device described hereinafter can be used as a node, namely as a slave node, for a wireless network to regulate at least one electric load.

A process for managing a wireless network having nodes with actuators for controlling an electric load, and sensors for generating control signals associated therewith, is also described according to claim 8. Preferred embodiments are described in the dependent claims.

As used herein, the term "electric load" comprises electric lamps.

In conventional electric power systems, i.e. in power systems operating with to the so-called "wired logic" technique, the control devices and the various electric loads are connected to one another according to a functional diagram.

Therefore, any changes in the operation of a conventional power system require the wiring between the control devices (such as switches or sensors) and the electric loads to be also changed.

These changes require the work of skilled operators and are significantly expensive and relatively time-consuming.

Civil power systems based on bus networks are also known, which have a plurality of control devices (such as sensors, namely manually operated switches) and a plurality of actuators (for example relays), for controlling the various electric loads.

In this technology, all the devices (i.e. control devices and actuator devices) have a shared connection for data exchange.

Furthermore, the actuators are connected to a power line for supplying power to the electric loads.

In commercial power systems based on bus networks the operation of the system can be changed without affecting the physical connections of the devices, by only changing their settings.

US 8 018 097 B2 discloses a switching control system of a circuit breaker which prevents transient phenomena that impact electric power systems and electric power equipment by controlling the opening or closing timing of the circuit breaker.

Civil power systems based on bus networks still suffer from certain drawbacks.

In particular, the replacement of a conventional, wired-logic power system with a bus network-based power system entails considerable costs.

The purpose of the inventor is to suggest a solution to at least partially solve the problems of the prior art.

In particular, one purpose of the inventor is to provide an easy and cost-effective solution to design a commercial power system that can be easily adapted to users' needs.

This purpose is achieved by of a two-way wireless device as described hereinafter, by a wireless network for regulating at least one electric load, whose nodes comprise a plurality of such two-way wireless devices and by a method for regulating at least one electric load as described hereinafter.

Possible embodiments of such device, of a network comprising a plurality of such devices and of a network management process will be described below with reference to the accompanying drawings, in which:

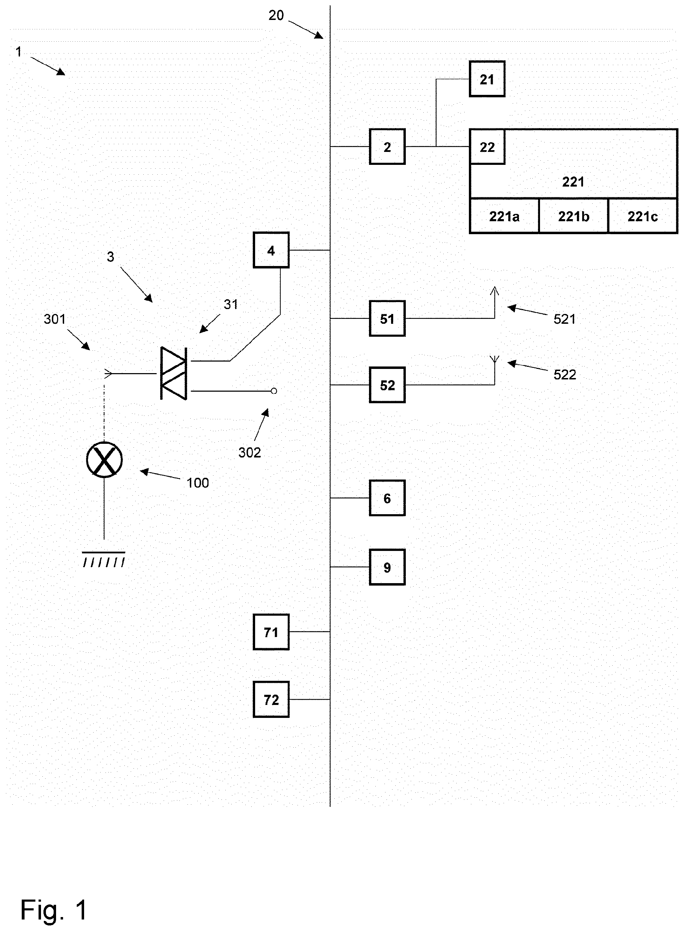

- Figure 1 is a block diagram of the circuit part of a two-way wireless device adapted to be used as a node for a control network that is designed to control at least one electric load, for example an electric lamp;
- Figure 2 is a diagrammatic view of a point-to-point control network in which nodes consist of devices like that of Figure 1;
- Figure 3 is a diagrammatic view of a data packet transmitted by the device of Figure 1;
- Figure 4 shows a data packet received by the device of Figure 1;
- Figure 5 shows the functional connections in a possible wireless network that uses three two-way wireless devices as slave nodes;
- Figure 8 is a schematic view of a table, contained in a master node of a wireless network, representing the condition of Figure 5.

Referring to the accompanying drawings, numeral 1 generally designates a two-way wireless device.

Using a plurality n of two-way wireless devices 1 a wireless network 10 with a proprietary transmission protocol may be designed, with a plurality n of slave nodes 1, 1_{,2}, 1_{,3}, .., 1ₙ, that are capable of direct or indirect transmit and receive communication, with a master node or gateway 11.

The master node or gateway 11 of the network 10 may be connected to an Internet network, through a home Wi-Fi network.

The operation of the network 10 may be programmed via an application available for download from an Internet site and for installation on a mobile communication device, such as a smartphone 15, which communicates with the master node 11.

In the network 10 every communication between the nodes 1, 1₂, 1₃, .., 1ₙ and the smartphone 15 passes through the master or gateway node 11.

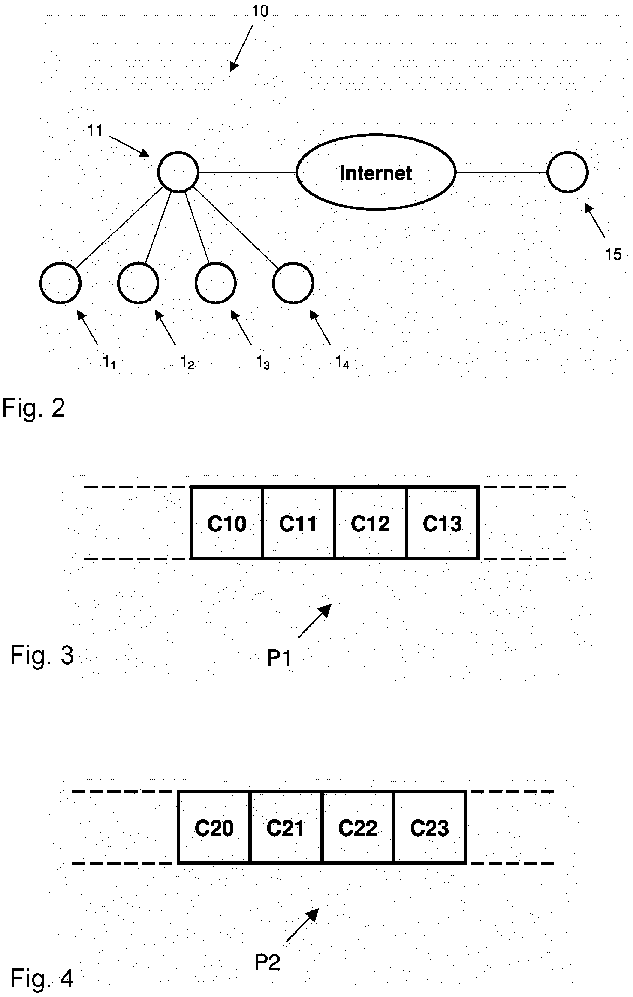

The wireless network 10 may be, for example, a point-to-multipoint wireless network (such as the one of Figure 2) or a mesh network.

In the mesh configuration, in addition to their receive-and-transmit operation with the master node or gateway 11, the n slave nodes of the network 10 can also operate as repeaters with one another (if one of the nodes 1 is not able to directly communicate with the master node 11.

The wireless network 10 can be used, for example, to regulate at least one electric load 100, for example an electric lamp 100.

In the described embodiment, the device 1 comprises a container 8 whose shape and size allow it to fit into a conventional wall-recessed box (e.g. the box typically known as "503 box") or a conventional recessed junction box.

Therefore, the container 8 comprises a first side, or front side 81, intended to be exposed, and a second side, or rear side, 82, intended to remain inside the box 80.

**In** the illustrated example, the device 1 comprises a programmable processor 2, a radio-frequency transmitter 51, a radio-frequency receiver 52, at least one antenna 521, 522, at least one actuator 3, for regulating the power absorbed by an electric load, and at least one sensor 6, 9.

For the purposes of the present description, actuator 3 relates to a device that converts a control signal into an action.

The actuator 3 is of the non-automatically operating type; it is actuated by a control signal from the microprocessor 2.

Since it is a non-automatic actuator, it is not able to disconnect the line unless it receives a control signal from the microprocessor 2.

The term actuator 3 comprises solid-state relays, dimmers and any other electronic regulator adapted to regulate the power absorbed by an electric load through an external intervention.

For the purposes of the present description, the term sensor 6, 9 includes manually operable switches, for example touch-sensitive switches, in particular capacitive tactile sensors.

The programmable processor 2 comprises a clock 21.

**In** the illustrated example, the programmable processor 2 is a microcontroller whose operation is regulated by a management program (firmware) stored inside a non-volatile memory 22.

As more clearly explained below, the programmable processor 2 is adapted to generate first data packets P1 and to process second data packets P2.

**In** the illustrated example, the non-volatile memory 22 of the programmable processor 2 comprises a register 221.

The register 221 comprises a first field 221a, which uniquely identifies the device **1,** and at least one second field 221b which uniquely identifies the actuator 3 associated with the device 1 (or the actuators associated with the device 1 if there are multiple actuators).

The microcontroller 2 used in the device 1 may be, for example, an ESP microchip 32 available from Esppressif.

In the illustrated example, the actuator 3 is a solid-state switching device which comprises a conventional TRIAC 31 and a conventional trigger signal generating circuit 4, for controlling the gate of the TRIAC 31, which is in turn controlled by the programmable processor 2.

The trigger 4 may be connected to the microcontroller 2 via a conventional bus 20, for example a conventional SPI bus 20.

The signal generated by the trigger 4 and addressed to the gate of the TRIAC 31 may be, for example, a square-wave signal, with a duty-cycle that can be adjusted according to users' needs.

The TRIAC 31 is electrically connected to two electrical terminals 301, 302 (accessible from the second side 82 of the container 8) which are intended to receive the ends of two wires of a phase of a commercial power system.

The TRIAC 31 may be used as an on/off switch or as a dimmer.

The radio-frequency transmitter 51 is designed to send, to the network 10, first data packets P1 (or output data packets from the device 1) generated by the programmable processor 2.

The radio-frequency receiver 52 is designed to receive, from the network 10, second data packets P2 (or input data packets) addressed to the programmable processor 2.

Therefore, the programmable processor 2 is able to communicate with the master node 11 of the network 10, by sending it first data packets P1 and receiving from it second data packets P2.

The first and second data packets P1, P2 (described in greater detail below) respectively comprise a field C10 and C20 for managing network synchronization 10.

The data packets P1 and P2 may also comprise a field, located at the beginning of the data packet, which contains data packet synchronization bits and a field containing an error correcting code.

In the illustrated embodiment, the first data packets P1, or transmitted data packets, have a format other than the format of the second data packets P2, or received data packets.

As mentioned above, at least one antenna 521, 522 is provided for transmission and reception of the data packets P1, P2 that are being sent to and received from the programmable processor 2.

In the illustrated example, two distinct antennas 521, 522 are provided.

A first antenna 521 is connected to the transmitter 51, for data transmission, and a second antenna 522 is connected to the receiver 52, for data reception.

In an alternative embodiment, not shown, there may be a single antenna with a conventional switch device for alternately connecting the antenna with the transmitter 51 and the receiver 52.

In the illustrated embodiment, the radio frequency transmitter 51 and the radio frequency receiver 52 are adapted to operate in the UHF band.

In a possible embodiment, the transmitter 51 and the receiver 52 may be integrated in the same microchip that contains the microcontroller 2.

The transmitter 51 may be a low power UHF transmitter (for example with an output power of up to 20 mWatt).

In a possible embodiment of the network 10 the master node 11 is designed using a device 1 that differs from the devices 1 used for the slave nodes 1, 1₂, 1₃, .., 1ₙ, in the firmware (contained in the register 22).

Each data packet P1 comprises a field C10 containing synchronization information for the network 10 and a field C11 identifying the sender node 1_{I} (and hence the device 1 that generated the packet).

Each data packet P1 comprises a field C12 identifying at least one sensor 6, 9 and a field C13 representative of the state of the sensor.

The data packets P2 that come from the master node 11 and are addressed to the microcontroller 2 of the device 1 (i.e. the node 1ⱼ that is the ultimate recipient of the communication) comprise a field C20 containing synchronization information for the network 10, a field C21 identifying the receiver node 1ⱼ, and hence the device 1 that is the receiver of the data packet P2, a field C22 identifying the actuator 3 associated with the receiver node 1ⱼ (contained in the device 1 to which the data packet P2 is addressed) and a field C23 representative of a control signal for the actuator 3.

In the illustrated example, the field C23 of the data packet P2 contains an on/off control signal to be sent to the trigger 4, which in turn controls the TRIAC 31.

The generation of the control signals to be sent to the actuators 3 of the network 10 may be also remotely controlled, for example by means of the aforementioned smartphone application, available for download from the Internet and for installation on the smartphone 15.

The sensor 6, 9 may be placed on the first side 81 of the container 8 and is connected to the microcontroller 2 via a conventional bus, for example a conventional SPI bus.

The sensor 6, 9 may be used to actuate one or more actuators 3, associated with one or more slave nodes 1, 1₂, 1₃, ..., 1ₙ of the network 10, to regulate one or more electric loads 100.

The actuators of the network 10 may be triggered not only by the sensor 6, but also remotely from the smartphone 15.

The signal generated by the sensor 6, 9 (which passes through the master node 11) may also be sent to the smartphone 15 to provide an updated state of operation of the network 10.

The non-volatile memory 221 of the programmable processor 2 comprises at least one third field 221c which uniquely identifies the sensor 6, 9.

In the illustrated example, the sensor 6 is a control sensor operable by a finger.

As mentioned above, the first sensor 6 may comprise a tactile sensor 6, for example a capacitive tactile sensor.

This solution avoids the risk of failures associated with the wear of mechanical components and thus improves the reliability of the device 1.

In an alternative embodiment (not shown), the control sensor 6 may be a mechanically actuated button.

The device 1 may comprise a conventional electroacoustic transducer (not shown) which beeps when the control sensor 6 is actuated by the user.

The two-way wireless device 1 may comprise a first light-emitting device 71 which is adapted to illuminate the first side 81 of the container 8 and, in particular, the actuation area of the control sensor 6.

The first light-emitting device 71 facilitates the identification of the position of the control sensor 6 and is particularly useful in the dark.

In a possible embodiment, the first light-emitting device 71 comprises an LED.

In a possible embodiment, the two-way wireless device 1 may comprise, in addition to or instead of the touch sensor 6, a motion detection sensor 9.

The motion detection sensor 9 may be, for example, a conventional passive infrared sensor.

The motion detection sensor 9 may be used, for example, to control an actuator 3 (for example to turn on the lights) or to inform the user that manages the network 10 (for example through the smartphone 15) that there are people at home.

In the smartphone application that manages the network 10, each slave node 1 of the network 10, each actuator 3, each sensor 6, 9 and each electric load 100 may be represented by icons.

The device 1 further comprises a conventional DC power supply (not shown), which may receive power by the same commercial power system that supplies power to the loads 100 managed by the network 10.

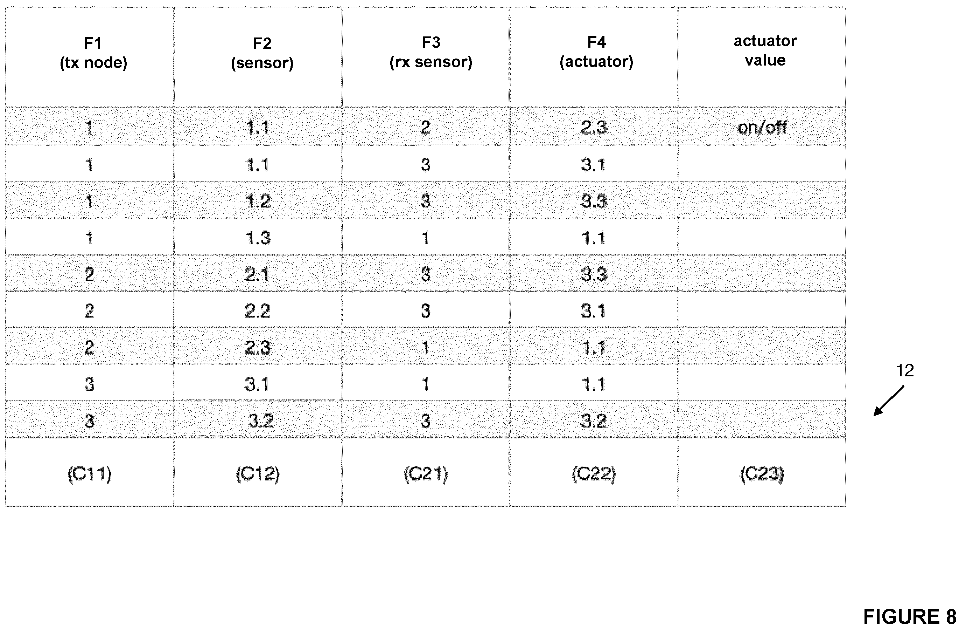

The master node 11 of the network 10 contains a table 12 (as shown in Figure 8) representing the association between each actuator 3 of each node of the network 10, and hence of each device 1 of the network 10, and each sensor 6, 9 of each node, and hence of each device 1 of the network 10.

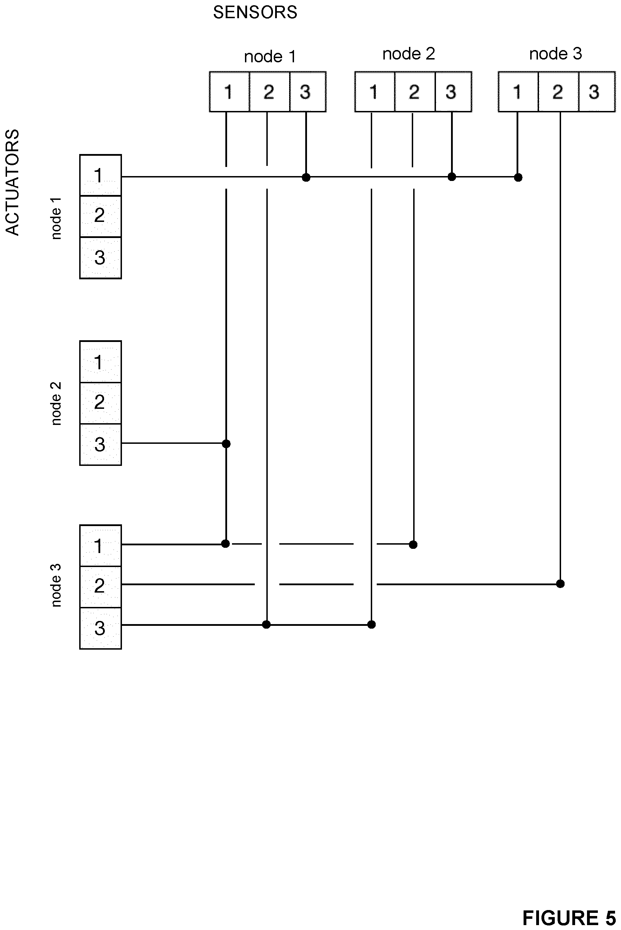

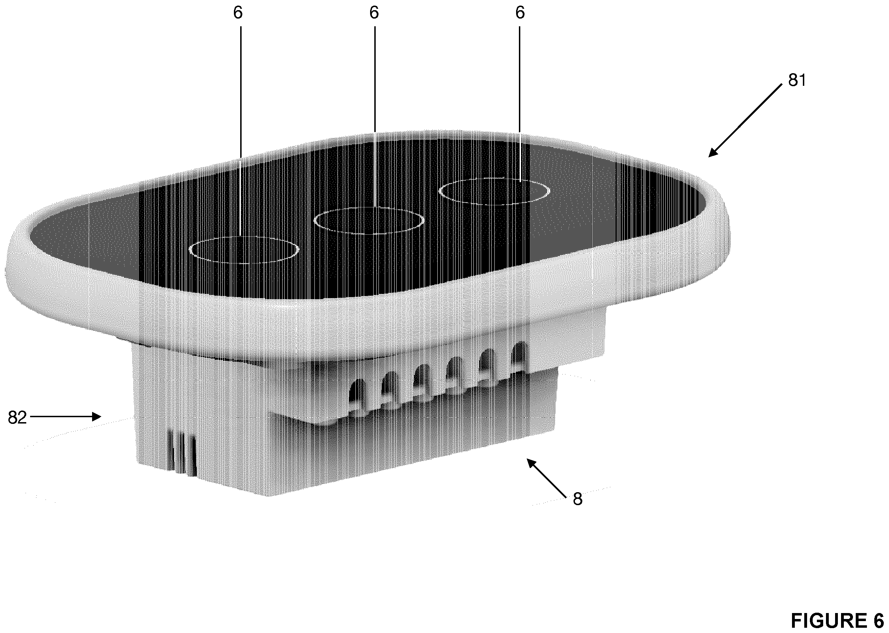

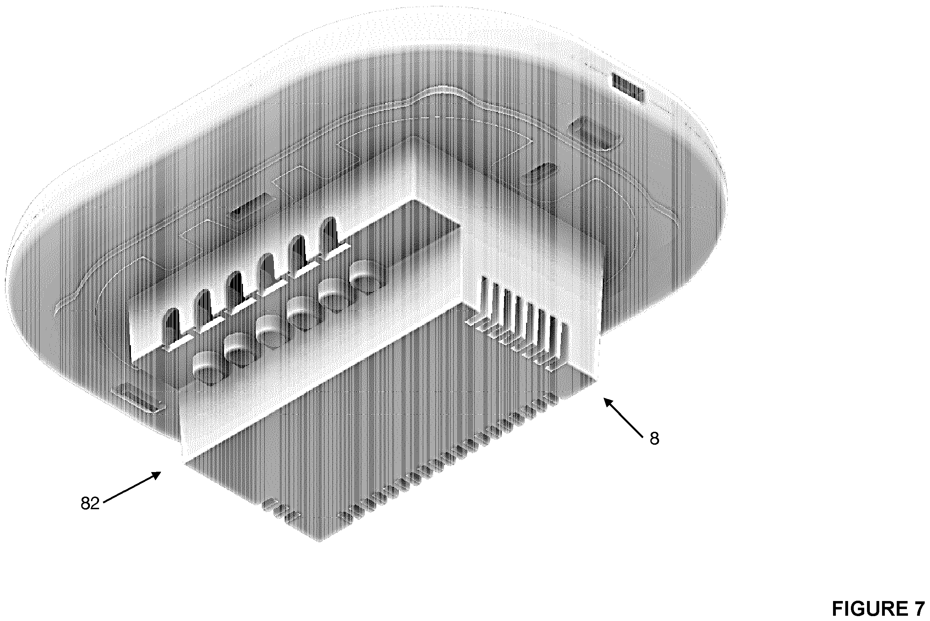

The values indicated in Table 12 are representative of the functional connections as shown in Figure 5.

For this purpose, the devices 1, the sensors 6, 9 and the actuators 3 may be identified by unique identification codes.

The table 12 may be created and modified by the user remotely, for example through the aforementioned application available for download from the Internet and for installation on the smartphone 15.

In the illustrated example, each record of the table 12 comprises a first field F1, a second field F2, a third field F3 and a fourth field F4.

The contents of the first four fields F1, F2, F3 and F4 are defined by the user, for example via the smartphone 15, and may be modified at a later time.

The first field F1 identifies a sender node 1_{I} of the network 10, from which a first data packet P1 is sent.

The second field F2 identifies a sensor 6, 9 associated with the sender node 1_{I} which transmits the first data packet P1.

The third field F3 identifies a node 1ⱼ which is the node with which the actuator to be triggered is associated, and hence the receiver node for the second data packet P2.

The fourth field F4 identifies an actuator 3 associated with the receiver node 1ⱼ for the data packet P2.

The association between the actuators 3 and the sensors 6, 9 associated with the various nodes 1, 1₂, 1₃, 1ₙ of the network 10 is created by the user as desired.

Therefore, one-to-one, one-to-many and many-to-one associations may be created between the actuators 3 and the sensors 6, 9 associated with the nodes of the network 10.

In other words, the state change of a sensor 6 associated with a node 1 of the network 10 can control one or more actuator devices 3 associated with the various nodes 1, 1_{,2}, 1_{,3}, 1ₙ of the network 10.

Likewise, each actuator 3 associated with a node of the network 10 can be triggered by one or more sensors 6 associated with the nodes of the network 10 (as well as by the smartphone 15). It should be noted that even when an actuator 3 and a sensor 6, 9 are part of the same device 1 (and hence are associated with the same node of the network) no functional association between the actuator 3 and the sensor 6 of the same wireless device 1 is implied.

Every time that the master node 11 receives a first data packet P1, a comparison is made between the fields C11 and C12 of the first data packet P1 with the first two fields F1, F2 of each record of the table 12 contained in the gateway 11.

For each matching record of the table 12 the contents of the following fields F3 and F4 are then checked.

Then, the gateway 11 creates a data packet P2 that comprises a field 20 containing synchronization information for the network 10, a field C21 identifying the receiver node 1ⱼ for the data packet P2, a field C22 identifying an actuator 3 associated with the node 1ⱼ and a field C23 to be sent to the actuator 3 of the node 1ⱼ corresponding to the content of the field C13 of the first data packet P1 or anyway having a value that is a function of the field C13.

The example of Figure 5 shows the functional connections in a possible network for regulating electric loads which comprises three devices 1 (and hence three slave nodes) each comprising three sensors and three actuators.

In this example, the first actuator of the first node may be triggered indifferently, by the third button of the first node, the third button of the second node and the first button of the third node.

Again, in this example, the first button of the first node may simultaneously control the third actuator of the second node and the first actuator of the third node.

In the illustrated embodiment as long as the finger is held on a control sensor 6, the microcontroller 2 cyclically creates data packets P1 (or frames) which are temporarily stored in a volatile memory 23 of the microcontroller 2.

As mentioned above, each data packet P1 comprises a field C10 containing synchronization information for the network 10 and a field C11 identifying the sender node 1_{I} (and hence the device 1 that transmitted the packet), a field C12 identifying the sensor 6, 9 and a field C13 representative of the state of the sensor.

For example, in the case of a conventional tactile sensor 6 designed to control solid-state relays, the state of the sensor can assume two values (on/off).

If the tactile sensor 6 is designed to control a dimmer, then its state can assume a plurality of values between two extremes.

If the actuator 3 is a dimmer, by varying the time during which the finger remains the tactile sensor 6, the user can also modulate the electric power supplied to the electric load 100.

Then, the content of the volatile memory 23 is transmitted, directly or through other nodes, to the master node 11.

In the illustrated embodiment of the network 10, the data packets P1 transmitted by the n slave nodes 1, 1_{,2}, 1_{,3}.₁ₙ to the master node 11 have a format that differs from the format of the data packets P2 transmitted from the master node 11 to the n slave nodes 1, 1₂, 1₃._{.1n}.

In one embodiment, not shown, the device 1 may also comprise a device (not shown) capable of generating email messages or messages to a cloud with a PCP protocol.

This solution may be particularly interesting because it can create a network 10 that can be also used as a remotely controlled alarm system.

In a possible embodiment, the device 1 may comprise a second light-emitting device 72.

The second light-emitting device 72 may perform various functions, for example it can be used to give the user potentially interesting information of potential interest such as, for example, the mode of operation of the two-way wireless device 1 or of the network 10.

Such communications may take place, for example, by generating luminous variations of considerable magnitude and speed and/or by changing the color temperature.

The second light-emitting device 72 can also be used, more simply, to create plays of light or pleasing light effects.

In the illustrated example, the second light-emitting device 72 comprises a plurality of LEDs adapted to generate, for example, diffused light.

In a possible embodiment, each device 1 comprises three distinct control sensors 6 (namely three distinct touch-sensitive buttons) and three distinct switching devices 3.

### Key:

- 1:: Two-way wireless device
- 1₁, 1₂ ..1ₙ: Network nodes
- 10:: Wireless Network
- 12:: Table
- 15:: Smartphone
- 2:: Microcontroller
- 11:: Master node or gateway
- 21:: Clock
- 22:: Nonvolatile memory
- 221:: Register
- 23:: Volatile Memory
- 3:: Actuator
- 31:: TRIAC
- 301.302: Electrical terminals
- 4:: Trigger
- 6:: Tactile sensor (touch-sensitive button)
- 51:: Transmitter
- 52:: Receiver
- 511:: Transmitting antenna
- 521:: Receiving antenna
- 71:: First light-emitting device
- 72:: Second light-emitting device
- 8:: Container
- 81:: First side of the container
- 82:: Second side of the container
- 9:: Motion Sensor
- 100:: Electric load

## Claims

1. A two-way wireless device (1), usable as a slave node for a wireless network,
comprising
a) a programmable processor (2) comprising a clock (21) adapted to generate first data packets (P1) and to process second data packets (P2);
b) a radio-frequency transmitter (51) for sending said first data packets (P1) generated by said programmable processor (2);
c) a radio-frequency receiver (52) for receiving said second data packets (P2) addressed to said programmable processor (2),
d) an antenna (521) connected to said transmitter (51) and an antenna (522) connected to said receiver (52);
e) at least one non-automatically operating actuator, for regulating an electric load (100) according to a control signal from said programmable processor (2);
f) at least one first sensor (6, 9) adapted to send a signal representative of its state to said programmable processor (2);
g) a container (8) comprising a first side (81) and a second side (82); **characterized in that**
h) said programmable processor (2) comprising a register (221) which comprises a first field (221a) identifying said device (1), a second field (221b) identifying said at least one actuator (3) and a third field (221c) identifying said at least one sensor (6, 9);
and **in that**
i) said first sensor (6, 9) comprises a tactile sensor (6); and **in that**
j) said first sensor (6, 9) is placed on a side (81) of said container (8).

2. A device as claimed in claim 1, wherein
said first data packets (P1) comprise a field (C11) identifying said device (1), a field (C12) identifying said at least one sensor (6, 9) and a field (C13) identifying the state of said at least one sensor (6, 9).

3. A device as claimed in claim 2, wherein
said second data packets (P2) comprise a field (C21) identifying a receiving wireless device (1ⱼ) for said data packet (P2), a field (C22) identifying an actuator (3) associated with said receiving wireless device (1ⱼ), and a field (C23) representative of a control signal for an actuator (3) associated with said receiving wireless device (1j).

4. A device as claimed in any of the preceding claims, further comprising a first light-emitting device (71), for illuminating the actuation area of said first sensor (6).

5. A device as claimed in any of the preceding claims, wherein said at least one sensor (6, 9) comprises a motion detection sensor (9).

6. A device as claimed in any one of the previous claims, comprising a second light-emitting device (72) for indicating, in particular, the mode of operation of said two-way wireless device (1) and/or of a network (10) of which said device (1) is a part.

7. A wireless network for controlling at least one electric load (100), wherein at least some of the nodes are devices as claimed in claim 1 or a claim dependent on claim 1.

8. A method of controlling at least one electric load (100) via a wireless network (10) comprising n nodes (1, 1_{, 2}, ... 1ₙ) and a gateway (11), which includes the preliminary step of creating, in said gateway (11), a table (12), with each record of said table (12) comprising a first field (F1) identifying a sender node (1_{I}), a second field (F2) identifying a sensor (6, 9) associated with said sender node (1_{I}), said first sensor (6, 9) comprising a tactile sensor (6), a third field (F3) identifying a receiver node (1ⱼ) and a fourth field (F4) identifying an actuator (3), associated with said receiver node (1ⱼ), for regulating an electric load (100) and **characterized by** comprising the steps of:
- creating a data packet (P1) which comprises a field (C10) containing synchronization information for said network (10), a field (C11) identifying a sender node (1_{I}) of said network (10), a field (C12) identifying a sensor (6, 9) associated with said sender node (1_{I}) and a third field (C13) representative of the state assumed by said sensor (6, 9);
- transmitting said data packet (P1) to said gateway (11);
- comparing said first and second fields (C11, C12) of said data packet (P1) with the first two fields (F1, F2) of each record of said table (12) contained in said gateway (11),
- for each matching record of said table (12), checking the contents of the fields (F3) and (F4);
- creating a data packet (P2) which comprises a field (20) containing synchronization information for the network (10), a field (C21) identifying the receiver node (1ⱼ) for the data packet (P2), a field (C22) identifying an actuator (3) associated with said node (1ⱼ) and a field (C23) representative of a control signal to be sent to the actuator (3) of the node (1ⱼ).

## Patentansprüche

1. Bidirektionale drahtlose Vorrichtung (1), die als Slave-Knoten für ein drahtloses Netzwerk verwendbar ist, umfassend
a) einen programmierbaren Prozessor (2), umfassend einen Taktgeber (21), der zum Erzeugen erster Datenpakete (P1) und zum Verarbeiten zweiter Datenpakete (P2) geeignet ist;
b) einen Hochfrequenzsender (51) zum Senden der von dem programmierbaren Prozessor (2) erzeugten ersten Datenpakete (P1);
c) einen Hochfrequenzempfänger (52) zum Empfangen der zweiten Datenpakete (P2), die an den programmierbaren Prozessor (2) adressiert sind,
d) eine mit dem Sender (51) verbundene Antenne (521) und eine mit dem Empfänger (52) verbundene Antenne (522);
e) mindestens ein nicht automatisch operierendes Stellglied zur Regelung eines elektrischen Verbrauchers (100) in Abhängigkeit von einem vom programmierbaren Prozessor (2) stammenden Steuersignal;
f) mindestens einen ersten Sensor (6, 9), der zum Senden eines für seinen Zustand repräsentativen Signals an den programmierbaren Prozessor (2) geeignet ist;
g) ein Gehäuse (8) umfassend eine erste Seite (81) und eine zweite Seite (82); **dadurch gekennzeichnet, dass**
h) der programmierbare Prozessor (2) ein Register (221) umfasst, das ein die Vorrichtung (1) identifizierendes erstes Feld (221a), ein das mindestens eine Stellglied (3) identifizierendes zweites Feld (221b) und ein den mindestens einen Sensor (6,9) identifizierendes drittes Feld (221c) umfasst;
und dass
i) der erste Sensor (6, 9) einen taktilen Sensor (6) umfasst;
und dass
j) der erste Sensor (6, 9) an einer Seite (81) des Gehäuses (8) angeordnet ist.

2. Vorrichtung nach Anspruch 1, wobei die ersten Datenpakete (P1) ein die Vorrichtung (1) identifizierendes Feld (C11), ein den mindestens einen Sensor (6, 9) identifizierendes Feld (C12) und ein den Zustand des mindestens einen Sensors (6, 9) identifizierendes Feld (C13) umfassen.

3. Vorrichtung nach Anspruch 2, wobei die zweiten Datenpakete (P2) ein eine drahtlose Empfangsvorrichtung (1ⱼ) für das besagte Datenpaket (P2) identifizierendes Feld (C21), ein Feld (C22), das ein mit der besagten drahtlosen Empfangsvorrichtung (1ⱼ) verbundenes Stellglied (3) identifiziert und ein Feld (C23), das ein Steuersignal für ein mit dem empfangenden drahtlosen Gerät (1ⱼ) verbundenes Stellglied (3) darstellt, umfassen.

4. Vorrichtung nach einem der vorhergehenden Ansprüche, ferner umfassend eine erste lichtemittierende Vorrichtung (71) zum Beleuchten des Aktivierungsbereichs des ersten Sensors (6).

5. Vorrichtung nach einem der vorangehenden Ansprüche, wobei der mindestens eine Sensor (6, 9) einen Bewegungserfassungssensor (9) umfasst.

6. Vorrichtung nach einem der vorhergehenden Ansprüche, umfassend eine zweite lichtemittierende Vorrichtung (72) zur Anzeige insbesondere des Betriebsmodus der bidirektionalen drahtlosen Vorrichtung (1) und/oder eines Netzwerks (10), von dem die Vorrichtung (1) Teil ist.

7. Drahtloses Netzwerk zur Steuerung mindestens eines elektrischen Verbrauchers (100), wobei mindestens einige der Knoten Vorrichtungen nach Anspruch 1 oder einem von Anspruch 1 abhängigen Anspruch sind.

8. Verfahren zur Steuerung mindestens eines elektrischen Verbrauchers (100) über ein drahtloses Netzwerk (10) umfassend Knoten (1, 1₂, ... 1ₙ) und ein Gateway (11),
das den vorläufigen Schritt des Erstellens einer Tabelle (12) in dem Gateway (11) umfasst, wobei jeder Datensatz der Tabelle (12) ein erstes Feld (F1), das einen Senderknoten (11) identifiziert, ein, einen dem Senderknoten (11) zugeordneten Sensor (6,9) identifizierendes, zweites Feld (F2) umfasst,
wobei der erste Sensor (6,9) einen Tastsensor (6), ein, einen Empfängerknoten (1ⱼ) identifizierendes, drittes Feld (F3) und ein, ein dem Empfängerknoten (1ⱼ) zugeordnetes Stellglied (3) identifizierendes, viertes Feld (F4) zum Regeln eines elektrischen Verbrauchers (100) umfasst
und **dadurch gekennzeichnet, dass** es die folgenden Schritte umfasst:
- Erzeugen eines Datenpakets (P1), das ein Synchronisationsinformationen für das Netzwerk (10) enthaltendes Feld (C10), ein einen Senderknoten (1ⱼ) des Netzwerks (10) identifizierendes Feld (C11), ein einen dem Senderknoten (1ⱼ) zugeordneten Sensor (6,9) identifizierendes Feld (C12) und ein drittes, den vom Sensor (6, 9) eingenommenen Zustand repräsentierendes Feld (C13) umfasst;
- Übertragen des Datenpakets (PI) an das Gateway (11);
- Vergleichen der ersten und zweiten Felder (C11, C12) des Datenpakets (PI) mit den ersten beiden Feldern (Fl, F2) jedes Datensatzes der in dem Gateway (11) enthaltenen Tabelle (12),
- für jeden zutreffenden Datensatz der Tabelle (12), Überprüfen des Inhalts der Felder (F3) und (F4);
- Erzeugen eines Datenpakets (P2), das ein eine Synchronisationsinformation für das Netzwerk (10) enthaltendes Feld (20), ein den Empfängerknoten (1ⱼ) für das Datenpaket (P2) identifizierendes Feld (C2l), ein ein dem Knoten (1ⱼ) zugeordnetes Stellglied (3) identifizierendes Feld (C22) und ein für ein an das Stellglied (3) des Knotens (1ⱼ) zu sendendes Steuersignal repräsentatives Feld (C23) umfasst.

## Revendications

1. Dispositif sans fil bidirectionnel (1), utilisable comme un nœud esclave pour un réseau sans fil, comprenant
a) un processeur programmable (2) comprenant une horloge (21) conçue pour générer des premiers paquets de données (P1) et pour traiter des seconds paquets de données (P2);
b) un émetteur radiofréquence (51) pour envoyer lesdits premiers paquets de données (P1) générés par ledit processeur programmable (2);
c) un récepteur radiofréquence (52) pour recevoir lesdits seconds paquets de données (P2) adressés audit processeur programmable (2),
d) une antenne (521) connectée audit émetteur (51) et une antenne (522) connectée audit récepteur (52);
e) au moins un actionneur à fonctionnement non automatique, pour réguler une charge électrique (100) en fonction d'un signal de commande provenant dudit processeur programmable (2);
f) au moins un premier capteur (6, 9) conçu pour envoyer un signal représentatif de son état audit processeur programmable (2);
g) un conteneur (8) comprenant un premier côté (81) et un deuxième côté (82);
**caractérisé en ce que**
h) ledit processeur programmable (2) comprenant un registre (221) qui comprend un premier champ (221a) identifiant ledit dispositif (1), un deuxième champ (221b) identifiant ledit au moins un actionneur (3) et un troisième champ (221c) identifiant ledit au moins un capteur (6, 9);
et **en ce que**
i) ledit premier capteur (6, 9) comprend un capteur tactile (6);
et **en ce que**
j) ledit premier capteur (6, 9) est placé sur un côté (81) dudit conteneur (8).

2. Dispositif selon la revendication 1, dans lequel
lesdits premiers paquets de données (P1) comprennent un champ (C11) identifiant ledit dispositif (1), un champ (C12) identifiant ledit au moins un capteur (6, 9) et un champ (C13) identifiant l'état dudit au moins un capteur (6, 9).

3. Dispositif selon la revendication 2, dans lequel
lesdits deuxièmes paquets de données (P2) comprennent un champ (C21) identifiant un dispositif récepteur sans fil (1ⱼ) pour ledit paquet de données (P2), un champ (C22) identifiant un actionneur (3) associé audit dispositif récepteur sans fil (1ⱼ), et un champ (C23) représentatif d'un signal de commande pour un actionneur (3) associé audit dispositif récepteur sans fil (1ⱼ).

4. Dispositif selon l'une quelconque des revendications précédentes, comprenant en outre un premier dispositif électroluminescent (71), pour éclairer la zone d'actionnement dudit premier capteur (6).

5. Dispositif selon l'une quelconque des revendications précédentes, dans lequel ledit au moins un capteur (6, 9) comprend un détecteur de mouvement (9).

6. Dispositif selon l'une quelconque des revendications précédentes, comprenant un second dispositif électroluminescent (72) pour indiquer, en particulier, le mode de fonctionnement dudit dispositif sans fil bidirectionnel (1) et/ou d'un réseau (10) dont ledit dispositif (1) fait partie.

7. Réseau sans fil pour commander au moins une charge électrique (100), dans lequel au moins certains des nœuds sont des dispositifs selon la revendication 1 ou une revendication dépendante de la revendication 1.

8. Procédé de commande d'au moins une charge électrique (100) via un réseau sans fil (10) comprenant n nœuds (1, 1, 2, ...1n) et un portail (11),
qui comprend l'étape préliminaire de création, dans ledit portail (11), d'un tableau (12), chaque enregistrement dudit tableau (12) comprenant un premier champ (F1) identifiant un nœud émetteur (1_{I}), un deuxième champ (F2) identifiant un capteur (6, 9) associé audit nœud émetteur (1_{I}), ledit premier capteur (6, 9) comprenant un capteur tactile (6), un troisième champ (F3) identifiant un nœud récepteur (1ⱼ) et un quatrième champ (F4) identifiant un actionneur (3), associé audit nœud récepteur (1ⱼ), pour réguler une charge électrique (100)
et **caractérisé en ce qu'**il comprend les étapes de:
- création d'un paquet de données (P1) qui comprend un champ (C10) contenant des informations de synchronisation pour ledit réseau (10), un champ (C11) identifiant un nœud émetteur (1_{I}) dudit réseau (10), un champ (C12) identifiant un capteur (6, 9) associé audit nœud émetteur (1_{I}) et un troisième champ (C13) représentatif de l'état adopté par ledit capteur (6, 9);
- transmission dudit paquet de données (P1) audit portail (11);
- comparaison desdits premier et deuxième champs (C11, C12) dudit paquet de données (P1) avec les deux premiers champs (F1, F2) de chaque enregistrement dudit tableau (12) contenu dans ledit portail (11),
- pour chaque enregistrement correspondant dudit tableau (12), vérification du contenu des champs (F3) et (F4) ;
- création d'un paquet de données (P2) qui comprend un champ (20) contenant des informations de synchronisation pour le réseau (10), un champ (C21) identifiant le nœud récepteur (1j) du paquet de données (P2), un champ (C22) identifiant un actionneur (3) associé audit nœud (1ⱼ) et un champ (C23) représentatif d'un signal de commande à envoyer à l'actionneur (3) du nœud (1ⱼ).
